# EUROPÄISCHE PATENTSCHRIFT

(11) **EP 0 917 993 B1**
(45) Veröffentlichungstag und Bekanntmachung des Hinweises auf die Patenterteilung: **27.08.2003**
(21) Anmeldenummer: 98119461.6
(22) Anmeldetag: 15.10.1998
(51) Int. Cl.: B60R 19/56, B60R 19/38

(54) **Hinterer Unterfahrschutz für Nutzfahrzeuge**
Rear underrun guard for utility vehicles
Protection arrière anti-encastrement pour véhicules utilitaires

(30) Priorität: 19.11.1997 DE 19751217
(43) Veröffentlichungstag der Anmeldung: 26.05.1999
(73) Patentinhaber: MAN Nutzfahrzeuge Aktiengesellschaft, 80976 München (DE)
(72) Erfinder: Senger, Jaroslav Dipl.-Ing., 81245 München (DE); Koch, Kurt, 80993 München (DE); Menrath, Petra, 85757 Karlsfeld (DE)

(56) Entgegenhaltungen:
- DE-A- 2 438 828
- GB-A- 2 086 811

## Beschreibung

Die Erfindung betrifft einen hinteren Unterfahrschutz für Nutzfahrzeuge gemäß dem Oberbegriff des Anspruches 1.

Aus der DE 24 38 828 C2 ist ein Stoßfänger für schwere Kraftfahrzeuge bekannt, der mit einer sich über die Breite des Kraftfahrzeuges erstreckenden, tiefer als der Rahmen des Kraftfahrzeuges liegenden Stoßstange ausgerüstet ist. Diese Stoßstange ist an den freien Enden zweier am Rahmen um eine horizontale Querachse schwenkbar angeordneter Tragarme angebracht. Zwischen den Tragarmen und dem Rahmen ist jeweils ein selbständig rückstellender, von einem Druckfluid beaufschlagbarer Stoßdämpfer eingeschaltet, der sowohl an dem Tragarm als auch an dem Rahmen um eine horizontale Querachse schwenkbar angelenkt ist. Auf diese Weise kann die Stoßstange aus ihrer Ruhestellung, bei Einwirken einer Stoßkraft gegen den Widerstand der Stoßdämpfer in einer eine horizontale und vertikale Richtungskomponente aufweisenden kreisbogenförmigen Bahn im Sinne einer Annäherung an den Rahmen bewegt werden.

Die als hydraulische Teleskopdämpfer energieabsorbierend ausgebildeten Stoßdämpfer lassen eine Einstellung der Höhenlage der Stoßstange auf eine Höhe potentieller Kollisionsfahrzeuge unterhalb deren Motorhaube zu. Somit können zunächst nur die Stoßstangen der miteinander kollidierenden Fahrzeuge aufeinandertreffen und gegebenenfalls Gefährdungen der Insassen und weitere Beschädigungen an den Fahrzeugen vermieden werden. Der bekannte Unterfahrschutz ist jedoch hinsichtlich seiner Ausführung relativ aufwendig und damit kostenintensiv.

Der Erfindung liegt die Aufgabe zugrunde, einen variabel positionierbaren, hinteren Unterfahrschutz hoher Stoßabsorptionsfähigkeit und funktionstechnischer Zuverlässigkeit zu schaffen, der hinsichtlich seines Fertigungs- und Montageaufwandes wirtschaftlich günstig darstellbar ist.

Diese Aufgabe wird erfindungsgemäß durch die Merkmale des Anspruches 1 gelöst.

Durch die erfindungsgemäße Lösung ist ein hinterer Unterfahrschutz für Nutzfahrzeuge gegeben, bei dem eine variable Positionier- und Einstellbarkeit seiner mittelbar an Längsträgern des Fahrzeuges angeordneten Stoßstange auf technisch zuverlässige und wirtschaftlich optimierte Weise ermöglicht ist. Dabei ist die sich über die Breite des Fahrzeuges erstreckende Stoßstange über ein starres, je Fahrzeugseite vorgesehenes Tragelement an den Längsträgem befestigt. Das starre Tragelement ist aus einem am Längsträger in horizontal beliebiger Position lösbar befestigten Halter sowie einer hieran in beliebiger Schwenkposition lösbar befestigten Gabel zusammengesetzt. Die Gabel ist über eine geeignete Verbindung mit der Stoßstange verbunden. Durch die in horizontaler Richtung beliebige Positionierbarkeit des Halters am Längsträger und der in beliebiger Schwenkposition am Halter positionierbaren, die Stoßstange tragenden Gabel ist eine optimale Einstellung des hinteren Unterfahrschutzes auf die räumlichen Gegebenheiten am Fahrzeug sowie dessen Verkehrsumfeldes ermöglicht

Hierzu ist der Halter in horizontal beliebiger Position mittels Schraubverbindungen am Längsträger lösbar befestigt. Der Halter weist trägerseitig zueinander beabstandete Bohrungen auf, die mit ihrem Lochbild auf ein Lochbild von am Längsträger in horizontaler Richtung in überschüssiger Anzahl vorgesehener Bohrungen abgestimmt sind, wobei die Schraubverbindungen zur Befestigung des Halters am Längsträger innerhalb gemeinsam sich überdeckender Bohrungen aufgenommen sind. Der Halter weist gabelseitig wenigstens ein kranzförmiges Lochbild zueinander beabstandeter Bohrungen auf, das auf wenigstens ein kranzförmiges Lochbild am halterseitigen Ende der Gabel angeordneter Bohrungen abgestimmt ist Hierbei sind zu einer lösbaren Befestigung der Gabel am Halter weitere Schraubverbindungen innerhalb gemeinsam sich überdeckender Bohrungen aufgenommen.

Anstelle der Schraubverbindungen können jedoch andere, hierfür geeignete Verbindungsetemente verwendet sein. Die Anzahl der vorzusehenen Schraubverbindungen und Verbindungselemente ist in Abhängigkeit von der erforderlichen Abstützkraft am hinteren Unterfahrschutz frei wählbar. Der erfindungsgemäße Unterfahrschutz kann somit sehr hohe Kräfte aufnehmen.

Gemäß einer weiteren Ausgestaltung der Erfindung kann der Halter gabelseitig eine konzentrisch innerhalb seines kranzförmigen Lochbildes angeordnete, abragende Zentrierung aufweisen, zwecks Lagerung der Gabel am Halter von einer konzentrisch innerhalb des kranzförmigen Lochbildes der Gabel angeordneten Zentrierbohrung aufgenommen ist.

Gemäß einer weiteren Ausgestaltung der Erfindung kann der Halter endseitig eine konzentrisch innerhalb seines kranzförmigen Lochbildes angeordnete Zentrierbohrung aufweisen, innerhalb dieser - zwecks Lagerung der Gabel am Halter - eine konzentrisch innerhalb des kranzförmigen Lochbildes der Gabel abragend angeordnete Zentrierung aufgenommen ist.

Gemäß einer weiteren Ausgestaltung der Erfindung kann die am Halter oder an der Gabel angeordnete Zentrierung durch ein einstückig mit dem Halter oder der Gabel gebildetes Rundprofil oder durch ein in einer Zentrierbohrung am Halter oder durch ein in der Zentrierbohrung der Gabel angeordnetes, separates Zentrierelement gegeben sein. Das einstückig mit dem Halter oder der Gabel gebildete Rundprofil der Zentrierung kann beispielsweise nach einem Preß- oder Tiefziehverfahren in das jeweilige Bauteil eingebracht werden.

Gemäß einer weiteren Ausgestaltung der Erfindung kann das separate Zentrierelement durch innerhalb der Zentrierbohrungen angeordnete Schraubverbindungen oder durch axial fixierbare Zentrierstifte gegeben sein.

Gemäß einer weiteren Ausgestaltung der Erfindung kann konzentrisch innerhalb des kranzförmigen Lochbildes des Halters ein zusätzliches kranzförmiges Lochbild mit Bohrungen vorgesehen sein, das auf ein zusätzliches kranzförmiges Lochbild von Bohrungen eines konzentrisch innerhalb des kranzförmigen Lochbildes der Gabel abgestimmt ist.

Gemäß einer weiteren Ausgestaltung der Erfindung kann das am halterseitigen Ende der Gabel angeordnete kranzförmige Lochbild und das konzentrisch zu diesem gegebenenfalls zusätzlich angeordnete kranzförmige Lochbild der zueinander beabstandet angeordneten Bohrungen jeweils etwa auf einen Halbkreis reduziert sein. Die konzentrisch innerhalb des kranzförmigen Lochbildes und des gegebenenfalls zusätzlichen, kranzförmigen Lochbildes der Gabel angeordnete Zentrierbohrung kann durch eine halbkreisförmige Ausklinkung gegeben sein. Bei Vorsehen zweier konzentrischer kranzförmiger Lochbilder können deren Bohrungen Schraubverbindungen in beliebiger Anzahl und Anordungskombination aufnehmen. Bei Erhöhung der Anzahl von Schraubverbindungen können in vorteilhafter Weise die Durchmesser der Bohrungen und damit die Durchmesser der kranzförmigen Lochbilder reduzierbar sein.

Gemäß einer weiteren Ausgestaltung der Erfindung kann zur bedarfsweisen, axialen Beabstandung von Halter und Gabel zwischen diesen wenigstens eine zusätzliche Distanzscheibe anordbar sein. Die Distanzscheibe kann zwecks Montage ein erstes Langloch aufweisen, mittels diesem sie zwischen Halter und Gabel bis zur Anlage an die Zentrierung einschiebbar ist. Zwecks Befestigung der Distanzscheibe können weitere, mit den kranzförmigen Lochbildern von Halter und Gabel korrespondierende Segmentlanglöcher zur Aufnahme von Verschraubungen vorgesehen sein.

Gemäß einer weiteren Ausgestaltung der Erfindung können bei der Distanzscheibe anstelle von Segmentlanglöchern oder zusätzlich zu diesen mit den kranzförmigen Lochbildern von Halter und Gabel korrespondierende, kreisförmige Löcher vorgesehen sein.

Gemäß einer weiteren Ausgestaltung der Erfindung können der Halter und die Gabel durch U-förmige Profile gebildet sein. Halter und Gabel können aus wirtschaftlich herstellbaren Preßteilen bestehen.

Gemäß einer weiteren Ausgestaltung der Erfindung kann die Verbindung zwischen Gabel und Stoßstange durch eine feste Verbindung realisiert sein. Diese Verbindung kann durch eine Schweißung, Nietung oder dergleichen gegeben sein. Alternativ hierzu kann die Stoßstange mittels einer konventionellen Verschraubung an der Gabel befestigt sein. Die Stoßstange kann beispielsweise durch ein Rohrprofil gebildet sein. Dieses kann beispielsweise zusätzlich zu seiner festen Verbindung in einer Bohrung der Gabel aufgenommen sein.

Nachfolgend ist die Erfindung anhand in der Zeichnung dargestellter Ausführungsbeispiele näher erläutert.

Es zeigen:
- Fig. 1: eine erste Ausführungsart eines an einem Heckbereich eines Nutzfahrzeuges angeordneten hinteren Unterfahrschutzes in Seitenansicht,
- Fig. 2: in vergrößerter Darstellung eine zweite Ausführungsvariante eines an einem Heckbereich eines Nutzfahrzeuges angeordneten Unterfahrschutzes in Seitenansicht,
- Fig. 3: ausschnittsweise einen an einem Heckbereich eines Nutzfahrzeuges angeordneten hinteren Unterfahrschutz in Draufsicht,
- Fig. 4: in Schnittdarstellung einen an einem Längsträger eines Nutzfahrzeuges befestigbaren Halter,
- Fig. 5: gemäß Fig. 4 eine Variante eines an einem Längsträger anordbaren Halters,
- Fig. 6: ausschnittsweise in Schnittdarstellung eine an einem Halter gelagerte und befestigte Gabel,
- Fig. 7: einen Halter mit einem zusätzlichen kranzförmigen Lochbild von Bohrungen in Einzeldarstellung,
- Fig. 8: gemäß Fig. 7 eine Gabel mit einem zusätzlichen kranzförmigen Lochbild von Bohrungen in Einzeldarstellung,
- Fig. 9: einen Halter mit einem kranzförmigen Lochbild von Bohrungen in Einzeldarstellung,
- Fig. 10: gemäß Fig. 9 eine Gabel mit einem kranzförmigen Lochbild von Bohrungen in Einzeldarstellung und
- Fig. 11: eine zwischen Halter und Gabel anordbare Distanzscheibe.

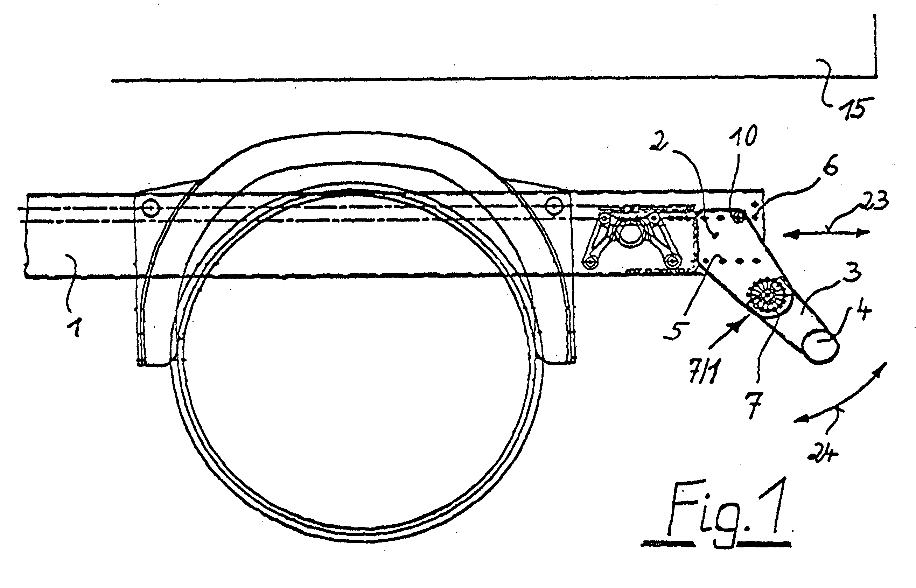

In Fig. 1 ist eine erste Ausführungsvariante eines in einem Heckbereich eines Nutzfahrzeuges an einem Längsträger 1 angeordneten hinteren Unterfahrschutzes gezeigt. Dieser setzt sich aus einem am Längsträger 1 mittels Schraubverbindungen 10 befestigten Halter 2, einer daran über Schraubverbindungen 11 befestigbaren Gabel 3 und einer hieran angeschlossenen, sich über die Breite des Fahrzeuges erstreckenden Stoßstange 4 zusammen. Halter 2 und Gabel 3 bilden zusammen ein starres Tragelement 2, 3, das einenendes je Fahrzeugseite an dem Längsträger 1 befestigt ist und anderenendes die Stoßstange 4 haltert. Der Halter 2 ist in beliebiger horizontaler Position 23 über Schraubverbindungen 10 am Längsträger 1 lösbar befestigt. Hierzu weist der Halter 2 zueinander beabstandete Bohrungen 5 eines bestimmten Lochbildes auf, das auf ein Lochbild von am Längsträger 1 in horizontaler Richtung in überschüssiger Anzahl vorgesehener Bohrungen 6 abgestimmt ist. Des weiteren ist an dem Halter 2 anderenendes die die Stoßstange 4 in beliebiger Schwenkposition 24 halternde Gabel 3 befestigt Halter 2 und Gabel 3 sind derart positionierbar, daß der Unterfahrschutz sowohl auf eine bezüglich der Fahrbahn und bezüglich potentieller Kollisionspartner abgestimmte Niveauhöhe als auch auf eine, die endseitigen Abmaße eines Aufbaues 15 des Nutzfahrzeuges berücksichtigende Einbauposition eingestellt werden kann. Eine gegebenenfalls erforderliche Korrektur der Einbauposition des Unterfahrschutzes ist mit geringem Montageaufwand möglich.

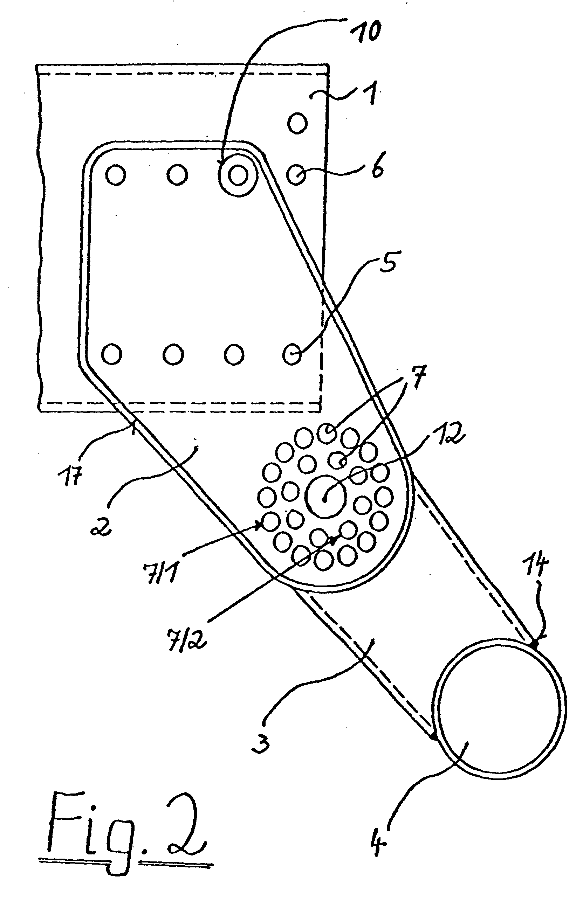

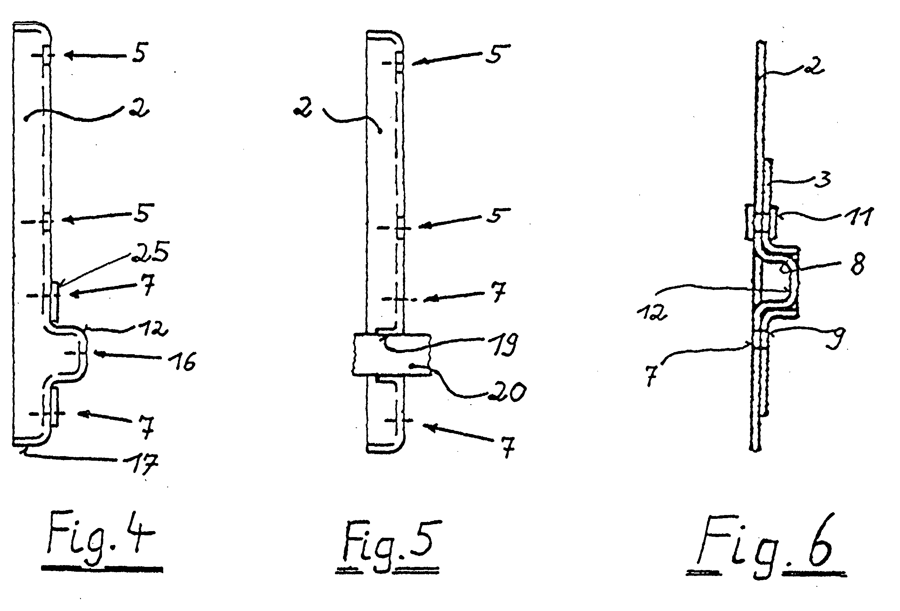

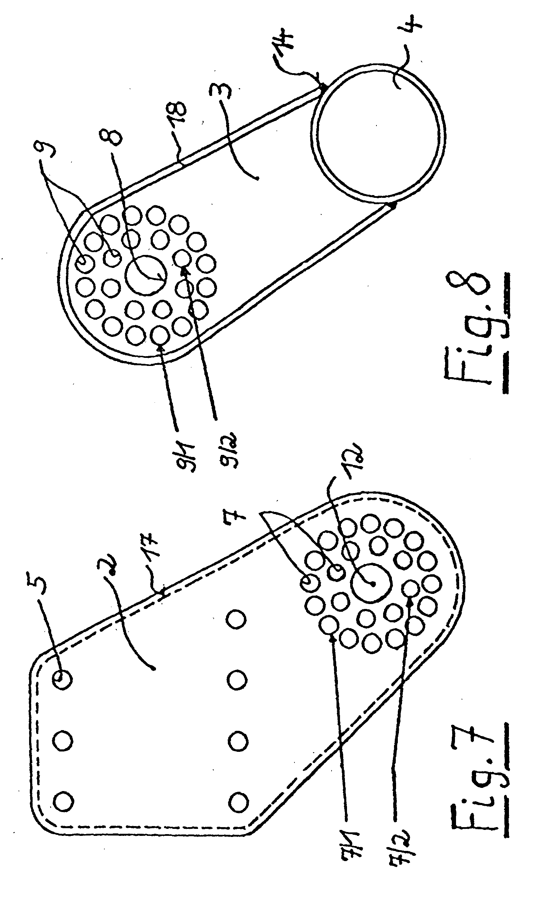

In Fig. 2 ist in vergrößerter Seitenansicht eine zweite Ausführungsvariante eines in einem Heckbereich eines Nutzfahrzeuges anordbaren Unterfahrschutzes gezeigt. Der an dem Längsträger 1 über Schraubverbindungen 10 befestigte Halter 2 weist an seinem freien Ende zur Anbringung der Gabel 3 ein äußeres kranzförmiges Lochbild 7/1 zueinander beabstandeter und in überschüssiger Anzahl vorgesehener Bohrungen 7 auf, das auf ein kranzförmiges Lochbild 9/1 am halterseitigen Ende der Gabel 3 angeordneter Bohrungen 9 abgestimmt ist (Fig. 7 und Fig. 8). Des weiteren ist konzentrisch innerhalb des äußeren, kranzförmige Lochbildes 7/1 des Halters 2 ein zusätzliches inneres kranzförmiges Lochbild 7/2 mit Bohrungen 7 vorgesehen, das mit Bohrungen 9 eines konzentrisch innerhalb des äußeren, kranzförmigen Lochbildes 9/1 der Gabel 3 zusätzlich angeordneten inneren Kranzes 9/2 korrespondiert. Zur Befestigung der Gabel 3 an dem Halter 2 sind innerhalb der einander überdeckenden Paare von Bohrungen 7, 9 gemeinsame Schraubverbindungen 11 (Fig. 6) aufgenommen. Anstelle von Schraubverbindungen 11 können auch andere, hierfür geeignete Befestigungsmittel vorgesehen sein. Der Halter 2 weist zur Lagerung der Gabel 3 eine Zentrierung 12 auf, die konzentrisch innerhalb des äußeren kranzförmigen 7/1 und des inneren kranzförmigen Lochbildes 7/2 angeordnet ist. Die hier (und in Fig. 4) gezeigte Zentrierung 12 ist einstückig mit dem Halter 2 gebildet. Gemäß einer weiteren Variante kann die Zentrierung ein separates, innerhalb einer Zentrierbohrung 19 des Halters 2 angeordnetes Zentrierelement 20 sein (Fig. 5). Dieses kann durch eine Schraubverbindung oder durch einen axial fixierten Zentrierstift gegeben sein. Gemäß einer anderen, hier nicht gezeigten Version kann die Zentrierung 12, 20 auch an der Gabel 3 angeordnet sein.

Die Verbindung 14 zwischen Gabel 3 und Stoßstange 4 ist hier durch eine Schweißverbindung realisiert. Gemäß einer anderen, hier nicht gezeigten Version kann die Gabel 3 auch eine Bohrung aufweisen, in die die Stoßstange 4 eingeführt und durch ein geeignetes Verbindungselement an der Gabel 3 befestigt ist.

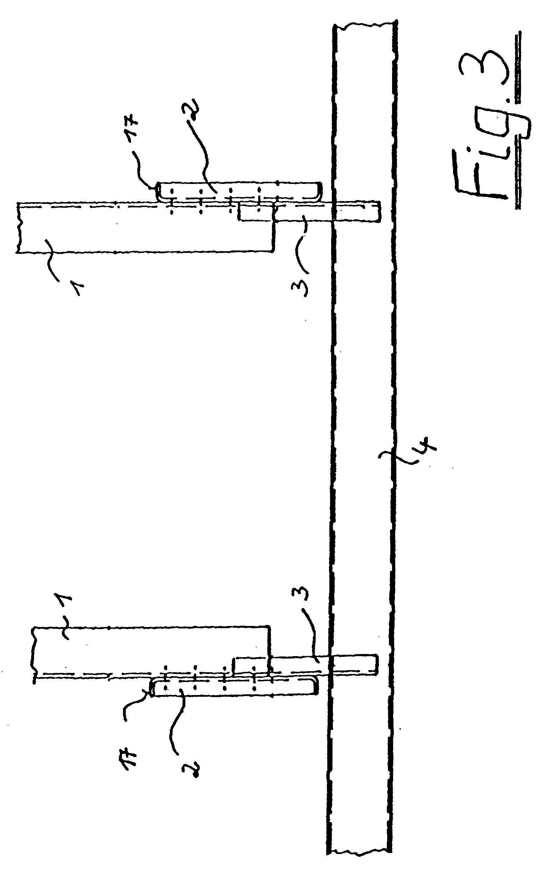

In Fig. 3 ist in Draufsicht ausschnittsweise ein hinterer Unterfahrschutz dargestellt, der über die starren Tragelemente 2, 3 an den jeweiligen Längsträgern 1 des Nutzfahrzeuges angeordnet ist. Die je Fahrzeugseite vorgesehenen starren Tragelemente 2, 3 sind jeweils durch den am Längsträger 1 angeordneten Halter 2 und der an diesem befestigten Gabel 3 gebildet. An dem freien Ende der Gabel 3 ist die Stoßstange 4 befestigt.

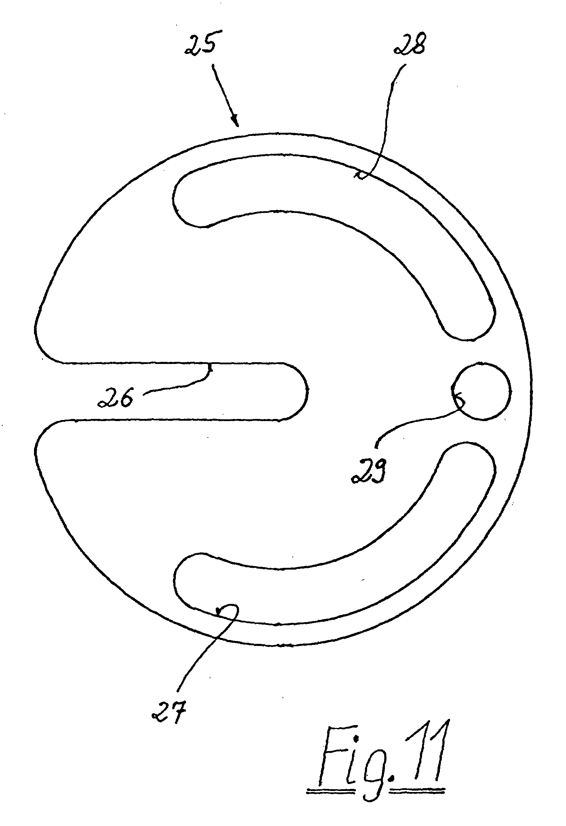

In Fig. 4 ist in Schnittdarstellung ein mit U-förmigem Profil versehener Halter 2 dargestellt. Der Halter 2 ist aus einem Bauteil, beispielsweise einem Preßteil gefertigt und weist ein als Zentrierung 12 ausgebildetes, ausgestülptes Rundprofil auf. Des weiteren weist der Halter 2 Bohrungen 5 zur Aufnahme der Schraubverbindungen 10 auf (Fig. 2), mittels diesen der Halter 2 am Längsträger 1 befestigbar ist. Die konzentrisch in einem kranzförmigen Lochbild 7/1 um die Zentrierung 12 angeordneten Bohrungen 7 sind zur Aufnahme der die Gabel 3 befestigenden Schraubverbindungen 11 (Fig. 6) vorgesehen. In der hier gezeigten Version weist die Zentrierung 12 eine zusätzliche Bohrung 16 auf, in die eine mit der Zentrierbohrung 8 der Gabel 3 korrespondierende Verschraubung oder Axialfixierung einsetzbar ist (Fig. 6). Des weiteren ist eine zwischen Halter 2 und Gabel 3 zwecks Beabstandung derselben anordbare Distanzscheibe 25 (Figuren 9 und 11) um die Zentrierung 12 des Halters 2 positioniert dargestellt.

In Fig. 6 ist ausschnittsweise in Schnittdarstellung ein Halter 2 mit einer daran über eine Schraubverbindung 11 befestigten Gabel 3 gezeigt Die Schraubverbindungen 11 sind jeweils innerhalb der am Halter 2 und der Gabel 3 gebildeten Paaren von Bohrungen 7, 9 angeordnet. In der hier gezeigten Version ist die Zentrierung 12 des Halters 2 formschlüssig von der Zentrierbohrung 8 der Gabel 3 aufgenommen. Die Zentrierbohrung 8 besteht hier aus einem Ringprofil mit umlaufendem Flansch. Der Halter 2 und die Gabel 3 können als Preßteile ausgeführt sein. Je nach Festigkeitsanforderung an den Unterfahrschutz kann eine erweiterbare Anzahl von Schraubverbindungen 10, 11 oder sonstiger Befestigungsmittel vorgesehen sein.

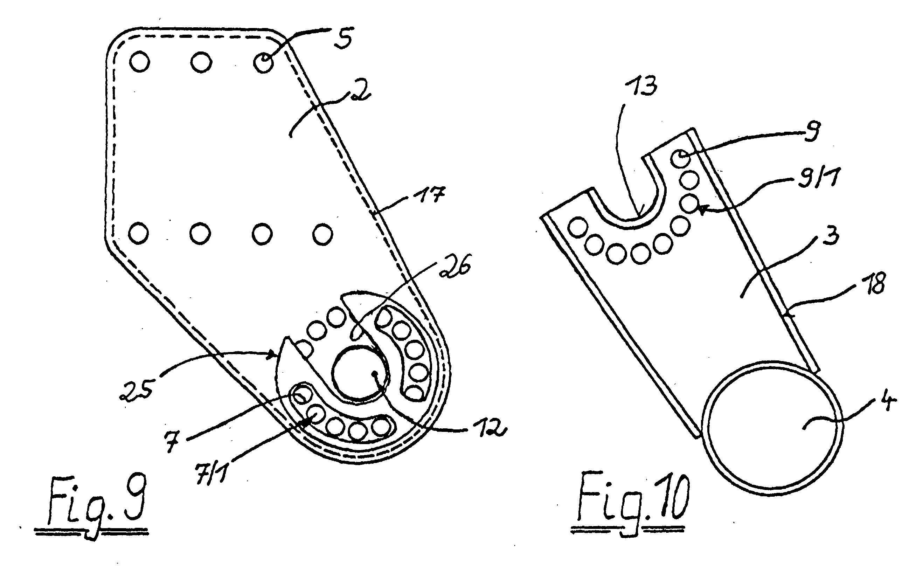

Gemäß Fig. 10 weist die Gabel 3 anstelle einer Zentrierbohrung 8 eine mit der Zentrierung 12 des Halters 2 (Fig. 9) korrespondierende, konzentrisch innerhalb des kranzförmigen Lochbildes 9/1 angeordnete, etwa halbkreisförmige Ausklinkung 13 auf. Die Gabel 3 weist in dem hier gezeigten Ausführungsbeispiel nur ein etwa auf einen Halbkreis reduziertes, kranzförmiges Lochbild 9/1 an Bohrungen 9 auf. Der Halter 2 und die Gabel 3 sind durch U-förmige Profile gebildet. So weist der Halter 2 einen umlaufend abragenden Flansch 17 und die Gabel 3 einen umlaufend abragenden Flansch 18 auf. Die abragenden Flansche 17, 18 dienen der Verstärkung des Halters 2 und der Gabel 3 und können fallweise mit Aussparungen versehen sein. Des weiteren ist zwecks axialer Positionierungsabstimmung zwischen Gabel 3 und Halter 2 wenigstens eine Distanzscheibe 25 zwischen Gabel 3 und Halter 2 einführbar und befestigbar.

In Fig. 11 ist die zur bedarfsweisen axialen Beabstandung von Halter 2 und Gabel 3 zwischen diesen anordbare Distanzscheibe 25 gezeigt. Diese ist zwecks ihrer Montage mit einem ersten, etwa dem Halbmesser der Distanzscheibe 25 entsprechend langen Langloch 26 versehen. Aufgrund des Langloches 26 ist die Distanzscheibe 25 zwischen Halter 2 und Gabel 3 bis zur Anlage an der Zentrierung 12; 22 einschiebbar. Der Durchmesser des Langloches 26 ist hierbei mit einer gewissen Toleranz auf den Durchmesser der Zentrierung 12; 22 abgestimmt. Zur endgültigen Befestigung der Distanzscheibe 25 weist diese weitere, mit den kranzförmigen Lochbildern 7/1, 7/2; 9/1, 9/2 korrespondierende Segmentlanglöcher 27, 28 zur Aufnahme der Verschraubungen 11 auf. Die Segmentlanglöcher 27, 28 können durch zusätzliche, mit den kranzförmigen Lochbildern 7/1, 7/2; 9/1, 9/2 korrespondierende, kreisförmige Löcher 29 ergänzt oder ersetzt sein.

## Patentansprüche

1. Hinterer Unterfahrschutz für Nutzfahrzeuge, mit einer sich über die Breite des Fahrzeuges erstreckenden, je Fahrzeugseite über ein starres Tragelement (2, 3) an einem Längsträger (1) befestigten Stoßstange (4), wobei das Tragelement (2, 3) aus einem am Längsträger (1) befestigbaren Halter (2) sowie einer hieran in beliebiger Schwenkposition fixierbaren, die Stoßstange (4) halternden Gabel (3) zusammengesetzt ist, **dadurch gekennzeichnet, daß** der Halter (2) in horizontal beliebiger Position mittels Schraubverbindungen (10) am Längsträger (1) lösbar befestigt ist und einenendes zueinander beabstandete Bohrungen, (5) aufweist, die mit ihrem Lochbild auf ein Lochbild von am Längsträger (1) in horizontaler Richtung in überschüssiger Anzahl vorgesehener Bohrungen (6) abgestimmt sind, wobei die Schraubverbindungen (10) innerhalb gemeinsam sich überdeckender Bohrungen (5, 6) aufgenommen sind, und daß der Halter (2) anderenendes wenigstens ein kranzförmiges Lochbild (7/1) zueinander beabstandeter Bohrungen (7) aufweist, das auf wenigstens ein kranzförmiges Lochbild (9/1) am halterseitigen Ende der Gabel (3) angeordneter Bohrungen (9) abgestimmt ist, wobei zu einer lösbaren Befestigung der Gabel (3) am Halter (2) Schraubverbiridungen (11) innerhalb gemeinsam sich überdeckender Bohrungen (7, 9) aufgenommen sind.

2. Unterfahrschutz nach Anspruch 1, **dadurch gekennzeichnet, daß** der Halter (2) gabelseitig eine konzentrisch innerhalb seines kranzförmigen Lochbildes (7/1) angeordnete, abragende Zentrierung (12) aufweist, die zwecks Lagerung der Gabel (3) am Halter (2) von einer konzentrisch innerhalb des kranzförmigen Lochbildes (9/1) der Gabel (3) angeordneten Zentrierbohrung (8) aufgenommen ist.

3. Unterfahrschutz nach Anspruch 1, **dadurch gekennzeichnet, daß** der Halter (2) gabelseitig eine konzentrisch innerhalb seines kranzförmigen Lochbildes (7/1) angeordnete Zentrierbohrung (19) aufweist, innerhalb dieser - zwecks Lagerung der Gabel (3) am Halter (2) - eine konzentrisch innerhalb des kranzförmigen Lochbildes (9/1) der Gabel (3) abragend angeordnete Zentrierung (22) aufgenommen ist.

4. Unterfahrschutz nach einem oder mehreren der vorangegangenen Ansprüche 1 bis 3, **dadurch gekennzeichnet, daß** die am Halter (2) oder an der Gabel (3) angeordnete Zentrierung (12; 22) durch ein einstückig mit dem Halter (2) oder der Gabel (3) gebildetes Rundprofil oder durch ein in der Zentrierbohrung (19) am Halter (2) oder durch ein in der Zentrierbohrung (8) der Gabel (3) angeordnetes, separates Zentrierelement (20) gegeben ist.

5. Unterfahrschutz nach Anspruch 4, **dadurch gekennzeichnet, daß** das separate Zentrierelement (20) durch innerhalb der Zentrierbohrungen (8, 19) angeordnete Schraubverbindungen oder axial fixierbare Zentrierstifte gegeben ist.

6. Unterfahrschutz nach einem oder mehreren der vorangegangenen Ansprüche 1 bis 5, **dadurch gekennzeichnet, daß** konzentrisch innerhalb des kranzförmigen Lochbildes (7/1) des Halters (2) ein zusätzliches kranzförmiges Lochbild (7/2) mit Bohrungen (7) vorgesehen ist, das auf ein zusätzliches kranzförmiges Lochbild (9/2) von Bohrungen (9) eines konzentrisch innerhalb des kranzförmigen Lochbildes (9/1) der Gabel (3) abgestimmt ist.

7. Unterfahrschutz nach einem oder mehreren der vorangegangenen Ansprüche 1 bis 6, **dadurch gekennzeichnet, daß** das am halterseitigen Ende der Gabel (3) angeordnete kranzförmige Lochbild (9/1) und das konzentrisch zu diesem gegebenenfalls zusätzlich angeordnete kranzförmige Lochbild (9/2) der zueinander beabstandet angeordneten Bohrungen (9) jeweils auf einen Halbkreis reduziert ist, und daß die konzentrisch innerhalb des kranzförmigen Lochbildes (9/1) und gegebenenfalls des zusätzlichen kranzförmigen Lochbildes (9/2) angeordnete Zentrierbohruung (8) durch eine halbkreisförmige Ausklinkung (13) gegeben ist.

8. Unterfahrschutz nach einem oder mehreren der vorangegangenen Ansprüche 1 bis 7, **dadurch gekennzeichnet, daß** zur bedarfsweisen axialen Beabstandung von Halter (2) und Gabel (3) zwischen diesen wenigstens eine zusätzliche Distanzscheibe (25) anordbar ist, die zwecks ihrer Montage ein erstes Langloch (26) aufweist, mittels diesem sie zwischen Halter (2) und Gabel (3) bis zur Anlage an der Zentrierung (12; 22) einschiebbar ist, und daß zwecks Befestigung der Distanzscheibe (25) weitere, mit den kranzförmigen Lochbildem (7/1, 7/2; 9/1, 9/2) von Halter (2) und Gabel (3) korrespondierende Segmentlanglöcher (27, 28) der Distanzscheibe (25) zur Aufnahme der Verschraubungen (11) vorgesehen sind.

9. Unterfahrschutz nach Anspruch 8, **dadurch gekennzeichnet, daß** bei der Distanzscheibe (25) anstelle von Langlöchern (27, 28) oder zusätzlich zu diesen mit den kranzförmigen Lochbildern (7/1, 7/2; 9/1, 9/2) von Halter (2) und Gabel (3) korrespondierende kreisförmige Löcher (29) vorgesehen sind.

10. Unterfahrschutz nach einem der Ansprüche 1 bis 9, **dadurch gekennzeichnet, daß** der Halter (2) und die Gabel (3) durch U-förmige Profile gebildet sind, und daß die Gabel (3) über eine feste Verbindung (14) mit der Stoßstange (4) verbunden ist.

## Claims

1. Rear underride guard for commercial vehicles with a bumper (4) extending across the width of the vehicle and fastened to a longitudinal member (1) at each side of the vehicle via a rigid carrier element (2, 3) composed of a bracket (2) attachable to the longitudinal member (1) and of a fork (3) fixable to said bracket (2) in any slewing position and supporting the bumper (4), **characterised in that** the bracket (2) is detachably fastened to the longitudinal member (1) in any horizontal position by means of bolted connections (10) and is, at one end, provided with bores (5) spaced some distance apart from each other, the hole pattern of which bores (5) is adapted to a hole pattern of bores (6) provided in excessive number and arranged in horizontal direction on the longitudinal member (1), the bolted connections (10) being accommodated within bores (5, 6) aligned to each other, and that at the other end the bracket (2) is provided with at least one ring-type hole pattern (7/1) of bores (7) spaced some distance apart from each other, which ring-type hole pattern (7/1) is adapted to at least one ring-type hole pattern (9/1) of bores (9) provided at that bracket-mounted end of the fork (3), whereby bolted connections (11) accommodated within the bores (7, 9) aligned to each other are provided for detachably connecting the fork (3) to the bracket (2).

2. Rear underride guard according to Claim 1, **characterised in that** the fork-mounted end of the bracket (2) is provided with a downward protruding centring feature (12) which is concentrically arranged within its ring-type hole pattern (7/1) and is, for the purpose of attaching the fork (3) to the bracket (2), accommodated by a centring bore (8) concentrically arranged within the ring-type hole pattern (9/1) of the fork (3).

3. Rear underride guard according to Claim 1, **characterised in that** the fork-mounted end of the bracket (2) is provided with a centring bore (19) which is concentrically arranged within its ring-type hole pattern (7/1) and accommodates - for the purpose of attaching the fork (3) to the bracket (2) - a downward protruding centring feature (22) concentrically arranged within the ring-type hole pattern (9/1) of the fork (3).

4. Rear underride guard according to one or several of the aforementioned Claims 1 to 3, **characterised in that** the centring feature (12; 22) arranged on the bracket (2) or on the fork (3) is provided as a round section which together with the bracket (2) or with the fork (3) forms a single piece or as a separate centring element (20) arranged in the centring bore (19) on the bracket (2) or in the centring bore (8) on the fork (3).

5. Rear underride guard according to Claim 4, **characterised in that** the separate centring element (20) is provided in the form of bolted connections or axially fixable centring pins within the centring bores (8, 19).

6. Rear underride guard according to one or several of the aforementioned Claims 1 to 5, **characterised in that** an additional ring-type hole pattern (7/2) with bores (7) is concentrically arranged within the ring-type hole pattern (7/1) of the bracket (2), which hole pattern (7/2) is adapted to an additional ring-type hole pattern (9/2) of bores (9) concentrically arranged within the ring-type hole pattern (9/1) on the fork (3).

7. Rear underride guard according to one or several of the aforementioned Claims 1 to 6, **characterised in that** the ring-type hole pattern (9/1) arranged at the bracket-mounted end of the fork (3) and the hole pattern (9/2) of the bores (9) spaced at a distance to one another, hole pattern (9/2) being, if necessary, additionally provided and concentrically arranged relative to the hole pattern (9/1), are each reduced to a semicircle and that the centring bore (8) concentrically arranged within the ring-type hole pattern (9/1) and, if necessary, also within the ring-type hole pattern (9/2) is provided in the form of a semicircular recess (13).

8. Rear underride guard according to one or several of the aforementioned Claims 1 to 7, **characterised in that** for the required axial spacing of the bracket (2) and the fork (3) at least one additional spacer disk (25) can be arranged between them, which spacer disk (25) is, for its assembly, provided with a first longitudinal slot (26), by means of which said disk (25) can be inserted between the bracket (2) and the fork (3) until it contacts the centring feature (12; 22), and that for the fastening of the spacer disk (25) further segmental slots (27, 28) in the spacer disk (25) correspond with the ring-type hole patterns (7/1, 7/2; 9/1, 9/2) on the bracket (2) and on the fork (3) for accommodating the bolted connections (11).

9. Rear underride guard according to Claim 8, **characterised in that** instead of or in addition to the longitudinal slots (27, 28) the spacer disk (25) is provided with circular holes (29) corresponding to the ring-type hole patterns (7/1, 7/2; 9/1, 9/2) on the bracket (2) and on the fork (3) and provided.

10. Rear underride guard according to one of the Claims 1 to 9, **characterised in that** the bracket (2) and the fork (3) are designed as U-shaped profiles and that the fork (3) is connected with the bumper (4) by means of a fixed connection (14).

## Revendications

1. Protection anti-encastrement arrière pour véhicules industriels, avec un pare-chocs (4) fixé à un longeron (1) de chaque côté du véhicule par le biais d'un élément porteur rigide (2, 3) et s'étendant sur la largeur du véhicule, auquel cas l'élément porteur (2, 3) se compose d'un support (2) fixable au longeron (1) ainsi que d'une fourche (3) supportant le pare-chocs (4) et fixable à lui dans une position pivotable à volonté, **caractérisée en ce que** le support (2) est fixé par liaisons vissées desserrables (10) au longeron (1) en position horizontale réglable à volonté et présente des alésages (5) réalisés à une distance égale les uns des autres à une extrémité. Ces alésages (5) s'adaptent avec leur configuration de perçage à une configuration de perçage d'alésages (6) prévus en nombre plus important en direction horizontale sur le longeron (1), auquel cas les liaisons vissées (10) s'intègrent dans des alésages (5, 6) se chevauchant. Caractérisée également **en ce que** le support (2) présente à l'autre extrémité au moins une configuration de perçage en forme de couronne (7/1) d'alésages (7) réalisés à une distance égale les uns des autres, qui s'adapte au moins à une configuration de perçage en forme de couronne (9/1) d'alésages (9) disposés à l'extrémité de la fourche (3) du coté du support, auquel cas des liaisons vissées (11) s'intègrent dans des alésages (7, 9) se chevauchant pour permettre une fixation desserrable de la fourche (3) sur le support (2).

2. Protection anti-encastrement selon la revendication 1, **caractérisée en ce que** le support (2) présente du côté de la fourche un alésage de centrage (12) disposé concentriquement à l'intérieur d'une configuration de perçage en forme de couronne (7/1) et qui s'adapte à un alésage de centrage (8), disposé concentriquement à l'intérieur de la configuration de perçage en forme de couronne (9/1) de la fourche (3) pour permettre la fixation de la fourche (3) sur le support (2).

3. Protection anti-encastrement selon la revendication 1, **caractérisée en ce que** le support (2) présente du côté de la fourche un alésage de centrage (19) disposé concentriquement à l'intérieur de sa configuration de perçage en forme de couronne (7/1), à l'intérieur duquel s'intègre un alésage de centrage (22) disposé concentriquement à l'intérieur de la configuration de perçage (9/1) de la fourche (3) pour permettre la fixation de la fourche (3) sur le support (2).

4. Protection anti-encastrement selon une ou plusieurs des revendications énoncées précédemment de 1 à 3, **caractérisée en ce que** l'alésage de centrage (12, 22) disposé sur le support (2) ou la fourche (3) est donné par un profilé rond formé d'une seule pièce avec le support (2) ou la fourche (3) ou un élément de centrage (20) séparé, disposé dans l'alésage de centrage (19) sur le support (2) ou par un élément de centrage (20) séparé, disposé dans l'alésage de centrage (8) de la fourche (3).

5. Protection anti-encastrement selon la revendication 4, **caractérisée en ce que** l'élément de centrage (20) séparé est composé de liaisons vissées ou de goujons de centrage fixables axialement disposés dans les alésages de centrage (8, 19).

6. Protection anti-encastrement selon une ou plusieurs des revendications énoncées précédemment de 1 à 5, **caractérisée en ce qu'**une configuration de perçage (7/2) supplémentaire en forme de couronne avec alésages (7) est prévue concentriquement à l'intérieur de la configuration de perçage en forme de couronne (7/1) du support (2) et s'adapte à une configuration de perçage supplémentaire en forme de couronne (9/2) avec alésages (9) d'une configuration de perçage en forme de couronne disposée concentriquement (9/1) de la fourche (3).

7. Protection anti-encastrement selon une ou plusieurs des revendications énoncées précédemment de 1 à 6, **caractérisée en ce que** la configuration de perçage en forme de couronne (9/1) disposée à l'extrémité de la fourche (3) du côté du support et la configuration de perçage en forme de couronne (9/2) disposée le cas échéant en supplément concentriquement à cette dernière avec des alésages (9) disposés à une distance égale les uns des autres est réduite à un demi-cercle, et **en ce que** l'alésage de centrage (8) disposé concentriquement à l'intérieur de la configuration de perçage en forme de couronne (9/1) et le cas échéant à l'intérieur de la configuration de perçage supplémentaire en forme de couronne (9/2) est muni d'une mortaise en forme de demi-cercle (13).

8. Protection anti-encastrement selon une ou plusieurs des revendications énoncées précédemment de 1 à 7, **caractérisée en ce qu'**au moins une rondelle entretoise (25) supplémentaire peut être disposée pour garder axialement une distance entre le support (2) et la fourche (3) en cas de besoin. Cette rondelle présente un premier trou oblong pour permettre sa pose et à l'aide duquel elle peut être intercalée entre le support (2) et la fourche (3) jusqu'au positionnement sur l'alésage de centrage (12, 22), et **en ce que** des boutonnières segmentées (27, 28) supplémentaires sur la rondelle entretoise (25), correspondant avec les configurations de perçage en forme de couronne (7/1, 7/2, 9/1, 9/2) du support (2) et de la fourche (3) sont prévus pour accueillir des liaisons vissées (11).

9. Protection anti-encastrement selon la revendication 8, **caractérisée en ce que**, dans le cas de la rondelle entretoise, des trous circulaires (29) correspondant avec les configurations de perçage en forme de couronne (7/1, 7/2, 9/1, 9/2) du support (2) et de la fourche (3) sont prévus à la place des trous oblongs (27, 28) ou bien en plus de ces derniers.

10. Protection anti-encastrement selon l'une des revendications 1 à 9, **caractérisée en ce que** le support (2) et la fourche (3) sont constitués de profilés en U, et **en ce que** la fourche (3) est liée au pare-chocs (4) par une liaison fixe (14).
